# EUROPEAN PATENT APPLICATION

(11) **EP 4 485 638 A1**
(43) Date of publication of application: **01.01.2025**
(21) Application number: 23217944.0
(22) Date of filing: 19.12.2023
(51) Int. Cl.: H01M 50/147, H01M 50/528, H01M 50/534, H01M 50/559, H01M 50/562

(54) **COVER ASSEMBLY, BATTERY AND ELECTRONIC APPARATUS**

(30) Priority: 27.06.2023 CN 202321657936 U
(71) Applicant: AESC Dynamics Technology (Jiangsu) Ltd., 214443 Wuxi City, Jiangsu Province (CN); AESC Dynamics Technology (Hubei) Ltd., Shiyan, Hubei Province 442002 (CN); AESC Dynamics Technology (Ordos) Ltd., Ordos, Inner Mongolia Autonomous Region 017200 (CN); AESC Dynamics Technology (Hebei) Ltd., Cangzhou City, Hebei Province 061758 (CN); AESC Intelligent Innovation Dynamics Technology (Shanghai) Ltd., Shanghai 201315 (CN)
(72) Inventor: CHE, Peipei, Jiangyin City, Wuxi City, 214443 (CN); CHEN, Hu, Jiangyin City, Wuxi City, 214443 (CN)
(74) Representative: Becker, Eberhard

(57) **Abstract**

The disclosure provides a cover assembly (10000), a battery, and an electronic apparatus. The electronic apparatus includes the battery, and the battery includes the cover assembly (10000). The cover assembly (10000) includes a cover body (1) and an electrode lead-out member (2). The cover body (1) has a penetrating cover through hole. The electrode lead-out member (2) has an outer conductive member (21) and an inner conductive member (22). The outer conductive member (21) includes a first metal layer (211) and a second metal layer (212) of different materials, and a connection layer (3) is provided between the first metal layer (211) and the second metal layer (212), so that the strength of connection between the first metal layer (211) and the second metal layer (212) is ensured.

## Description

### BACKGROUND

### Technical Field

The disclosure relates to the field of batteries, and in particular, relates to a cover assembly, a battery, and an electronic apparatus.

### Description of Related Art

Generally, a currently-available electrode lead-out member is made by soldering a copper plate and an aluminum plate together. The copper plate is used for electrical connection to the tabs led out from the electrode assembly in the battery, and the aluminum plate is used for connection to the external aluminum bar. However, the copper plate and the aluminum plate are made of different metals, so the reliability of connection is poor, resulting in poor reliability of the outer conductive member.

### SUMMARY

In order to solve the technical problems and to overcome the defect of poor reliability of the outer conductive member found in the related art, the disclosure provides a cover assembly, a battery, and an electronic apparatus.

The disclosure solves the above technical problems through the following technical solutions.

A cover assembly includes a cover body and an electrode lead-out member. The cover body has a penetrating cover through hole. The electrode lead-out member has an outer conductive member and an inner conductive member. The inner conductive member passes through the cover through hole, is configured to be electrically connected to a tab led out from an electrode assembly, and is electrically connected to the outer conductive member. The outer conductive member includes a first metal layer and a second metal layer of different materials, and a connection layer is provided between the first metal layer and the second metal layer.

In this solution, the outer conductive member includes the first metal layer and the second metal layer, and the two are connected through the connection layer, so that the strength of connection between the two is ensured, and the reliability of the outer conductive member is ensured.

Preferably, a first through hole is provided on the first metal layer, and at least a portion of the second metal layer is located in the first through hole.

In this solution, at least a portion of the second metal layer is located in the first through hole of the first metal layer, so that a size of the second metal layer is reduced, and material costs of the second metal layer are lowered.

Preferably, a second through hole is provided in the second metal layer, and at least a portion of the inner conductive member is located in the second through hole and connected to the second metal layer at the second through hole.

In this solution, the arrangement of the second through hole allows the inner conductive member to extend into the second through hole and be connected to the second metal layer. In this way, the electrical connection between the outer conductive member and the inner conductive member is achieved, and a weight of the second metal layer may also be reduced.

Preferably, the first through hole includes a through hole portion and a sink portion. The sink portion is located on a side of the first metal layer away from the electrode assembly. A middle portion of the sink portion is provided with the through hole portion and forms a step together with the through hole portion. At least a portion of the second metal layer is connected to a side of the sink portion close to the electrode assembly.

In this solution, the first through hole is in a stepped shape, and the side of the sink portion close to the electrode assembly can support the second metal layer, so that the connection between the first metal layer and the second metal layer is reliable.

Preferably, the connection layer is made of solder, and at least a portion of the first metal layer and at least a portion of the second metal layer are connected by soldering.

Alternatively, the second metal layer and the inner conductive member are made of a same metal material, and the second metal layer and the inner conductive member are electrically connected.

In this solution, the second metal layer and the inner conductive member are made of the same metal material, so that the second metal layer and the inner conductive member are connected.

Preferably, in an axial direction of the outer conductive member, the first metal layer and the second metal layer at least partially overlap. A side of the connection layer close to the electrode assembly extends to a side of an overlapping portion of the first metal layer and the second metal layer close to the electrode assembly. A side of the connection layer away from the electrode assembly extends to a side of the overlapping portion of the first metal layer and the second metal layer away from the electrode assembly.

In this solution, the first metal layer and the second metal layer form an overlapping region in the axial direction of the outer conductive member. Both ends of the connection layer extend to both ends of the overlapping region and completely cover the overlapping region, so that the effect of connection between the first metal layer and the second metal layer is enhanced, and the strength of connection is improved.

Preferably, an accommodating groove is formed between opposite side walls of the first metal layer and the second metal layer, and the connection layer at least partially extends into the accommodating groove.

In this solution, at least a portion of the connection layer extends to the accommodating groove. In this way, when the first metal layer and the second metal layer are connected through the connection layer, a material of the connection layer is prevented from overflowing and contaminating surfaces of the first metal layer and the second metal layer. The accommodating groove accommodates the material of the connection layer.

Preferably, in an axial direction of the outer conductive member, a side of the accommodating groove away from the electrode assembly does not exceed a side of the first metal layer away from the electrode assembly.

Alternatively, in an axial direction of the outer conductive member, a side of the connection layer away from the electrode assembly extends to a side of the accommodating groove close to the electrode assembly.

In this solution, the side of the accommodating groove away from the electrode assembly does not exceed the side of the first metal layer away from the electrode assembly, so that when the first metal layer and the second metal layer are being connected, the material of the connection layer is prevented from overflowing and contaminating an upper surface of the first metal layer.

The side of the connection layer away from the electrode assembly extends to the side of the accommodating groove close to the electrode assembly, so that the strength of connection between the first metal layer and the second metal layer is improved. Further, when an upper portion of the connection layer does not exceed the accommodating groove, the accommodating groove can well accommodate the overflowing of the material of the connection layer, so the material of the connection layer is prevented from overflowing.

Preferably, the connection layer and the accommodating groove are in an annular shape surrounding an axis of the outer conductive member.

In this solution, the connection layer is annular, so that a connection area between the first metal layer and the second metal layer is large, the strength of connection is improved, and the effect of connection is enhanced. A shape of the accommodating groove matches a shape of the connection layer, so the accommodating groove can well accommodate the overflowed material of the connection layer.

Preferably, accommodating openings are provided on side walls of the first metal layer and/or the second metal layer to form the accommodating groove.

In this solution, when only one of the two metal layers, the first metal layer and the second metal layer, is provided with the stepped accommodating opening, the surface of the other metal layer can be made smooth to facilitate processing. Through the arrangement of the accommodating opening on the metal layer, on the one hand, the weight of the metal layer is reduced, and on the other hand, the accommodating opening on the metal layer can also be conveniently used as a positioning portion for tooling. When both the metal layers are provided with accommodating openings to form the accommodating groove together, a connection seam of the two metal layers is located in a middle portion of the accommodating groove, so that the accommodating groove can well accommodate the overflowed material of the connection layer in the connection seam of the two metal layers.

Preferably, the accommodating opening has a width of 0.05mm to 8mm and a depth of 0.05mm to 4mm.

In this technical solution, through such an arrangement, a size of the accommodating groove is prevented from being excessively small, so that inconvenient processing is prevented, and the effect on accommodating the material of the connection layer is prevented from being unfavorable. Further, the size of the accommodating groove is also prevented from being excessively large, so that weakening of the strength of the first metal layer and/or the second metal layer is prevented from being excessive.

Preferably, the first metal layer and the second metal layer are provided with a mutually matching concave-convex structure.

In this solution, through the arrangement of the mutually matching concave-convex structure, positioning is achieved, and rotation is prevented. The reliability of electrical connection between the first metal layer and the second metal layer is improved, so that the overcurrent reliability of the outer conductive member is enhanced.

Preferably, one of the first metal layer and the second metal layer is provided with a first convex portion and the other one of the first metal layer and the second metal layer is provided with a first concave portion, and the first convex portion and the first concave portion are matched with each other to form the concave-convex structure.

Each of the first convex portion and the first concave portion has a width of 0.2mm to 8mm and a height of 0.1mm to 4mm.

In this solution, through such an arrangement, a size of the first concave portion is prevented from being excessively large, so that weakening of the strength of the first metal layer or the second metal layer is prevented from being excessive. Further, sizes of the first concave portion and the first convex portion are prevented from being excessively small, so that the effect on prevention of rotation is prevented from being unfavorable, and problems such as inconvenient processing are prevented from occurring.

Preferably, at least a portion of the first metal layer and at least a portion of the second metal layer are sequentially arranged in an axial direction of the outer conductive member, and the concave-convex structure is arranged along the axial direction of the outer conductive member.

In this solution, the concave-convex structure is arranged in the axial direction, so the structure is simple and easy to be assembled.

Preferably, one of the first metal layer and the second metal layer has a fitting concave portion, and at least a portion of the other one of the first metal layer and the second metal layer is fitted into the fitting concave portion.

In this solution, the first metal layer and the second metal layer are fitted to each other, so the reliability of connection between the two is improved, and the overcurrent reliability of the outer conductive member is enhanced.

Preferably,, a fitting width of the first metal layer and the second metal layer is 0.2mm to 15mm.

In this solution, through such an arrangement, the fitting width is prevented from being excessively small, so that unreliable fitting is prevented from occurring. Further, the fitting width is also prevented from being excessively large, so that the sizes of the first metal layer and the second metal layer are prevented from being excessively large.

A battery includes a casing, the cover assembly, and the electrode assembly. The cover assembly covers the casing and defines a receiving chamber together with the casing. The electrode assembly is received in the receiving chamber.

An electronic apparatus includes the battery.

The positive progress effects provided by the disclosure include the following.

Through the arrangement of the connection layer connecting the first metal layer and the second metal layer, on the one hand, the difficulty in connecting the first metal layer and the second metal layer is reduced, and on the other hand, the strength of connection between the first metal layer and the second metal layer is ensured, so that the reliability of the outer conductive member is ensured.

### BRIEF DESCRIPTION OF THE DRAWINGS

FIG. 1 is a schematic view of a structure of a cover assembly provided by Embodiment 1 of the disclosure.
FIG. 2 is a cross-sectional view taken along A-A in FIG. 1.
FIG. 3 is an enlargement view of the portion B in FIG. 2.
FIG. 4 is a schematic view of a structure of an outer conductive member provided by Embodiment 1 of the disclosure.
FIG. 5 is a schematic view of a structure of connection between a first metal layer and a second metal layer provided by Embodiment 1 of the disclosure.
FIG. 6 is a schematic exploded view of the structure of the outer conductive member provided by Embodiment 1 of the disclosure.
FIG. 7 is a schematic view of the structure of the outer conductive member provided by Embodiment 2 of the disclosure.
FIG. 8 is a cross-sectional view taken along C-C in FIG. 7.
FIG. 9 is a schematic view of the structure of connection between the first metal layer and the second metal layer provided by Embodiment 2 of the disclosure.
FIG. 10 is a schematic exploded view of the structure of the outer conductive member provided by Embodiment 2 of the disclosure.
FIG. 11 is a schematic exploded view of the structure of the outer conductive member provided by Embodiment 2 of the disclosure.
FIG. 12 is a schematic view of the structure of the outer conductive member provided by Embodiment 3 of the disclosure.
FIG. 13 is a cross-sectional view taken along D-D in FIG. 12.
FIG. 14 is a schematic exploded view of the structure of the outer conductive member provided by Embodiment 3 of the disclosure.
FIG. 15 is a schematic view of the structure of the outer conductive member provided by Embodiment 4 of the disclosure.
FIG. 16 is a cross-sectional view taken along E-E in FIG. 15.
FIG. 17 is a schematic exploded view of the structure of the outer conductive member provided by Embodiment 4 of the disclosure.
FIG. 18 is a schematic view of the structure of the outer conductive member provided by Embodiment 5 of the disclosure.
FIG. 19 is a cross-sectional view taken along E-E in FIG. 18.

### DESCRIPTION OF THE EMBODIMENTS

The following is a preferred embodiment and a more clear and complete description of the disclosure together with the accompanying drawings.

The following should be noted:
The dotted lines and dashed lines in the drawings are auxiliary lines made to facilitate understanding of the location of components and the boundaries between components, or to facilitate labeling, and do not represent the actual structure of the components.

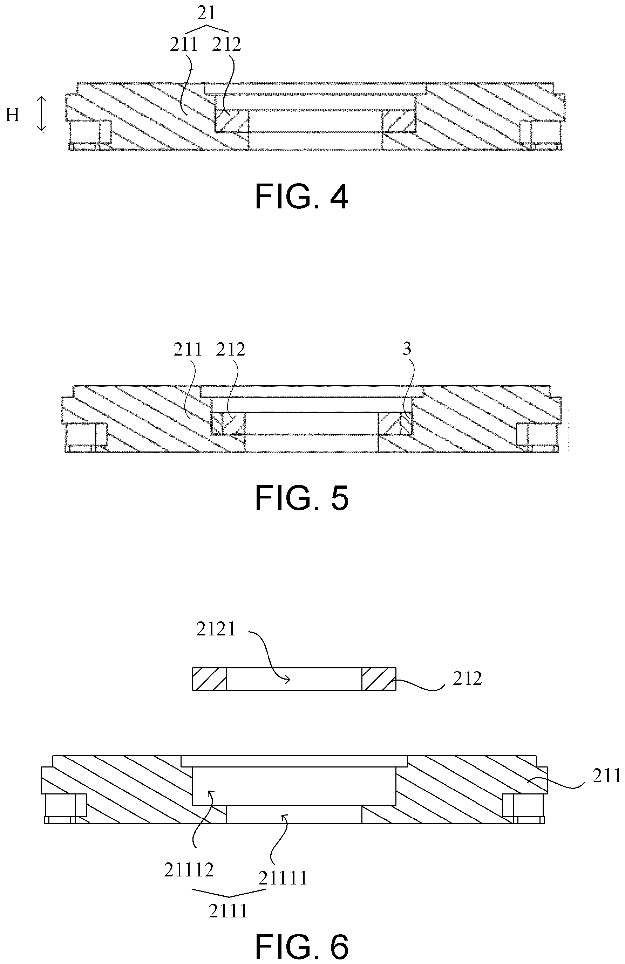

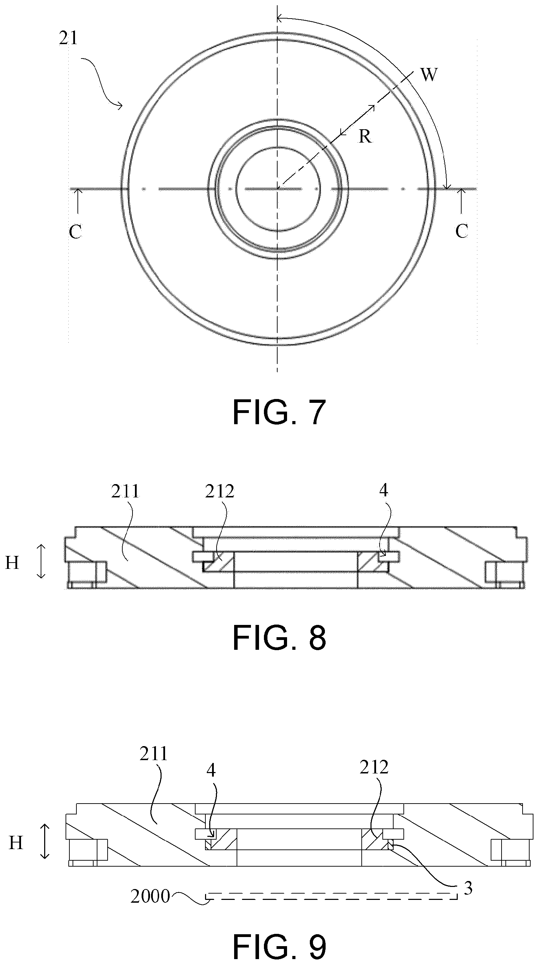

In an axial direction, a thickness of a connection layer is much less than a thickness of a first metal layer and is also much less than a thickness of a second metal layer. In order to illustrate the positional relationship of the connection layer relative to the first metal layer, the second metal layer, and an accommodating groove and to facilitate labeling of the connection layer, in FIG. 5 and FIG. 9, the thickness of the connection layer in a radial direction is enlarged, and the thickness of the second metal layer in the radial direction is reduced. It does not represent the actual thickness of the connection layer and the actual thickness of the second metal layer, and the connection layer is omitted in other figures.

Unless otherwise specified, an axial direction H refers to an axial direction of an outer conductive member. Unless otherwise specified, a radial direction R refers to a radial direction of the outer conductive member. When the outer conductive member is non-circular, the radial direction refers to the direction that passes through an axis of the outer conductive member and is perpendicular to the axis of the outer conductive member. Unless otherwise specified, a circumferential direction W refers to a circumferential direction of the outer conductive member. In Embodiments 1 to 5, the axial direction is parallel to a vertical direction, the outer conductive member and an electrode lead-out member are coaxial, and the radial direction and axial direction of the outer conductive member correspond to a radial direction and an axial direction of the electrode lead-out member respectively.

Between two values, endpoint values are included, for example, 1 to 2 and between 1 and 2 includes 1 and 2.

### Embodiment 1

This embodiment provides an electronic apparatus. The electronic apparatus includes a battery, and the battery includes a casing, a cover assembly, and a cell. The cover assembly covers the casing and defines a receiving chamber together with the casing. The cell is received in the receiving chamber and is connected to an electrode assembly.

The electronic apparatus includes but not limited to: a notebook computer, a pen input computer, a mobile computers, an e-book player, a portable telephone, a portable fax machine, a portable copier, a portable printer, stereo headphones, a videocassette recorder, liquid-crystal display television, a portable cleaner, a portable CD player, a mini-disc, a transceiver, an electronic notepad, a calculator, a memory card, a portable recorder, a radio, a backup power source, a motor, a car, a motorcycle, a power-assisted bicycle, a bicycle, a lighting appliance, a toy, a game console, a clock, a power tool, a flash lamp, a camera, a large-scale domestic storage battery, or an energy storage or sodium ion capacitor and the like.

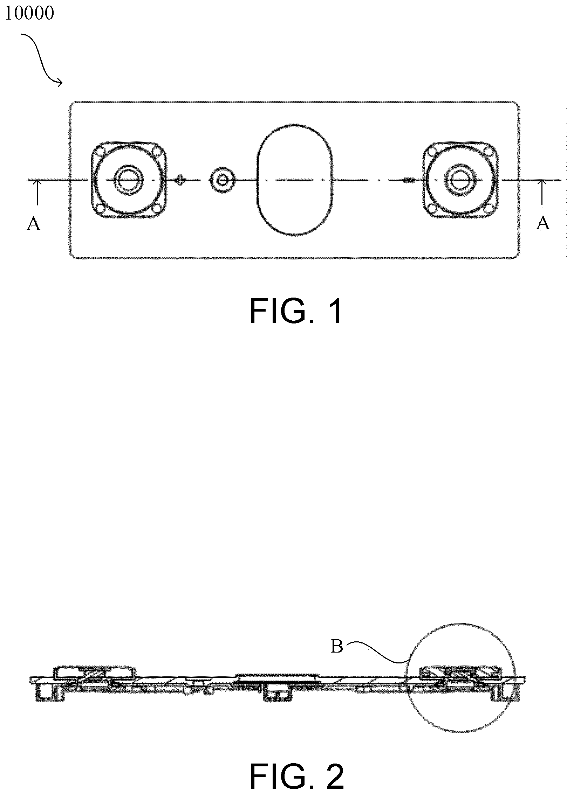

Herein, FIG. 1 to FIG. 6 are schematic views of a structure of a cover assembly 10000 provided by Embodiment 1 of the disclosure. Other structures of the battery except the cover assembly 10000 have been disclosed in a large number of documents in the related art. For details, please refer to the related art.

As shown in FIG. 1 to FIG. 6, the cover assembly 10000 includes a cover body 1 and an electrode lead-out member 2.

The cover body 1 has a penetrating cover through hole.

The electrode lead-out member 2 has an outer conductive member 21 and an inner conductive member 22.

The inner conductive member 22 passes through the cover through hole, is configured to be electrically connected to a tab led out from an electrode assembly 2000, and is electrically connected to the outer conductive member 21.

The outer conductive member 21 includes a first metal layer 211 and a second metal layer 212 of different materials, and a connection layer 3 is provided between the first metal layer 211 and the second metal layer 212. By connecting the first metal layer 211 and the second metal layer 212 through the connection layer 3, on the one hand, the difficulty in connecting the first metal layer 211 and the second metal layer 212 is reduced, and on the other hand, the strength of connection between the first metal layer 211 and the second metal layer 212 is ensured, so that the reliability of the outer conductive member 21 is ensured.

Optionally, as shown in FIG. 6, a first through hole 2111 is provided on the first metal layer 211. As shown in FIG. 4, the second metal layer 212 is located in the first through hole 2111, so that a size of the second metal layer 212 is reduced, and material costs of the second metal layer 212 are lowered.

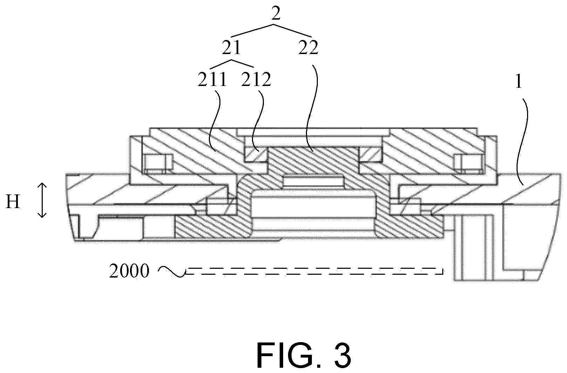

Optionally, as shown in FIG. 6, a second through hole 2121 is provided in the second metal layer 212. As shown in FIG. 3, a portion of the inner conductive member 22 is located in the second through hole 2121 and connected to the second metal layer 212 at the second through hole 2121. The arrangement of the second through hole 2121 allows the inner conductive member 22 to extend into the second through hole 2121 and be connected to the second metal layer 212. In this way, the electrical connection between the outer conductive member 21 and the inner conductive member 22 is achieved, and a weight of the second metal layer 212 may also be reduced.

To be specific, in this embodiment, the first metal layer 211 is made of aluminum, and the second metal layer 212 is made of copper. The connection layer 3 is made of solder for soldering, and the first metal layer 211 and the second metal layer 212 are connected by soldering. The inner conductive member 22 is made of copper, and the tab led out from the electrode assembly 2000 is copper. The second metal layer 212 is provided with a through hole, and the inner conductive member 22 passes through and soldered to the second metal layer 212 at the through hole on the second metal layer 212.

Optionally, as shown in FIG. 6, the first through hole 2111 includes a through hole portion 21111 and a sink portion 21112. As shown in FIG. 3, the sink portion 21112 is located on a side of the first metal layer 211 away from the electrode assembly 2000. A middle portion of the sink portion 21112 is provided with the through hole portion 21111 and forms a step together with the through hole portion 21111. At least a portion of the second metal layer 212 is connected to a side of the sink portion 21112 close to the electrode assembly 2000. The first through hole 2111 is in a stepped shape, and the side of the sink portion 21112 close to the electrode assembly 2000 can support the second metal layer 212, so that the connection between the first metal layer 211 and the second metal layer 212 is reliable.

As shown in FIG. 3 and FIG. 5, in an axial direction of the outer conductive member 21, the first metal layer 211 and the second metal layer 212 at least partially overlap. A side of the connection layer 3 close to the electrode assembly 2000 extends to a side of an overlapping portion of the first metal layer 211 and the second metal layer 212 close to the electrode assembly 2000. A side of the connection layer 3 away from the electrode assembly 2000 extends to a side of the overlapping portion of the first metal layer 211 and the second metal layer 212 away from the electrode assembly 2000. That is, the first metal layer 211 and the second metal layer 212 form an overlapping region in the axial direction of the outer conductive member 21. Both ends of the connection layer 3 extend to both ends of the overlapping region and completely cover the overlapping region, so that the effect of connection between the first metal layer 211 and the second metal layer 212 is enhanced, and the strength of connection is improved.

### Embodiment 2

FIG. 7 to FIG. 11 are schematic views of the structure provided by Embodiment 2 of the disclosure. Only the differences from Embodiment 1 are described in detail in this embodiment. For other structures in this embodiment, please refer to Embodiment 1 and other embodiments.

As shown in FIG. 7 to FIG. 9, an accommodating groove 4 is formed between opposite side walls of the first metal layer 211 and the second metal layer 212, and as shown in FIG. 9, the connection layer 3 extends to a bottom portion of the accommodating groove 4. When the first metal layer 211 and the second metal layer 212 are connected through the connection layer 3, the accommodating groove 4 can prevent a material of the connection layer 3 from overflowing and contaminating surfaces of the first metal layer 211 and the second metal layer 212. The accommodating groove 4 accommodates the material of the connection layer 3.

As shown in FIG. 9, in the axial direction of the outer conductive member 21, a side of the accommodating groove 4 away from the electrode assembly 2000 does not exceed a side of the first metal layer 211 away from the electrode assembly 2000. That is, an upper surface of the accommodating groove 4 is not higher than an upper surface of the first metal layer 211. In this way, when the first metal layer 211 and the second metal layer 212 are being connected, the material of the connection layer 3 is prevented from overflowing and contaminating the upper surface of the first metal layer 211.

As shown in FIG. 9, in the axial direction of the outer conductive member 21, a side of the connection layer 3 away from the electrode assembly 2000 extends to a side of the accommodating groove 4 close to the electrode assembly 2000. That is, an upper portion of the connection layer 3 extends to the bottom portion of the accommodating groove 4, so the strength of connection between the first metal layer 211 and the second metal layer 212 is improved. Further, when the upper portion of the connection layer 3 does not exceed the accommodating groove 4, the accommodating groove 4 can well accommodate the overflowing of the material of the connection layer 3, so the material of the connection layer 3 is prevented from overflowing.

As shown in FIG. 9, the connection layer 3 and the accommodating groove 4 are in an annular shape surrounding an axis of the outer conductive member 21, so that a connection area between the first metal layer 211 and the second metal layer 212 is large, the strength of connection is improved, and the effect of connection is enhanced. A shape of the accommodating groove 4 matches a shape of the connection layer 3, so the accommodating groove 4 can well accommodate the overflowed material of the connection layer 3.

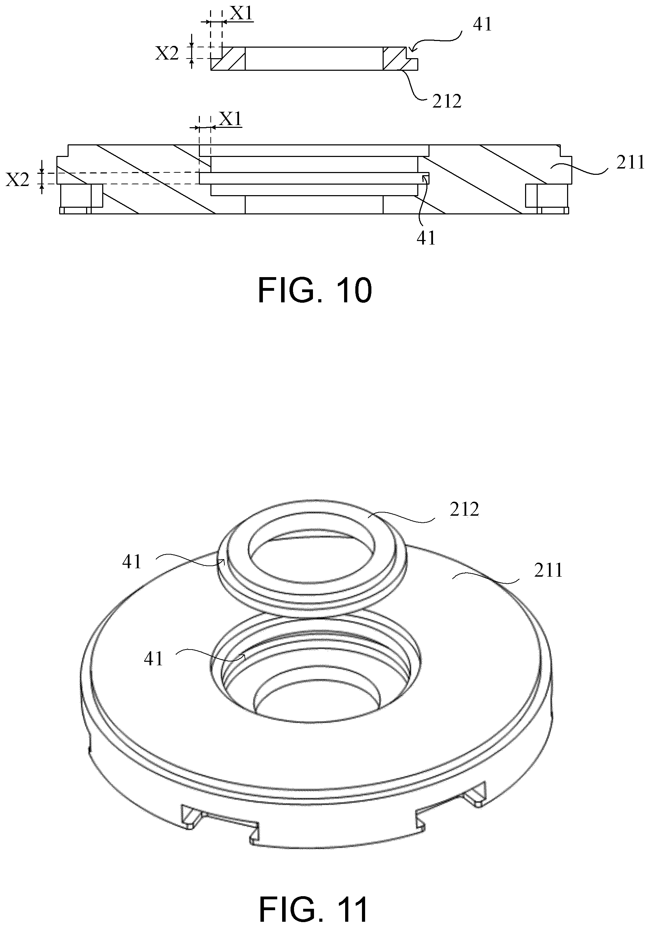

As shown in FIG. 10 and FIG. 11, accommodating openings 41 are provided on both the side walls of the first metal layer 211 and the second metal layer 212 to form the accommodating groove 4 together. In this way, a connection seam of the two metal layers is located in a middle portion of the accommodating groove 4, so that the accommodating groove 4 can well accommodate the overflowed material of the connection layer 3 in the connection seam of the two metal layers. Through the arrangement of the accommodating openings 41 on the metal layers, on the one hand, the weight of each metal layer is reduced, and on the other hand, the accommodating openings 41 on the metal layers may also be conveniently used as positioning portions for tooling.

In other embodiments, only one of the two metal layers, the first metal layer 211 and the second metal layer 212, may be provided with the accommodating opening 41. In this case, the surface of the other metal layer may be made smooth to facilitate processing.

As shown in FIG. 10, widths of the accommodating openings 41 on the first metal layer 211 and the second metal layer 212 are both X1, X1=0.5mm, and depths are both X2, and X2 =0.5mm. In other embodiments, the first metal layer and the second metal layer may have different widths and different depths. In other embodiments, X1 may be other values, such as 0.04mm, 0.05mm, 0.2mm, 1mm, 8mm, and 10mm, and X2 may be other values, such as 0.04mm, 0.05mm, 0.2mm, 1mm, 4mm, and 5mm. When X1 is between 0.05mm and 8mm and X2 is between 0.05mm and 4mm, a size of each accommodating opening 41 may be prevented from being excessively small, so that inconvenient processing is prevented. Further, the size of each accommodating opening 41 may also be prevented from being excessively small, so that the formed accommodating groove 4 is prevented from having an excessively small size and thus prevented from exhibiting unfavorable accommodation effect. Moreover, the size of each accommodating opening 41 is prevented from being excessively large, so that weakening of the strength of the first metal layer 211 and the second metal layer 212 is prevented from being excessive. When X1 is between 0.2mm and 1mm and X2 is between 0.2mm and 1mm, the effect is more preferable.

### Embodiment 3

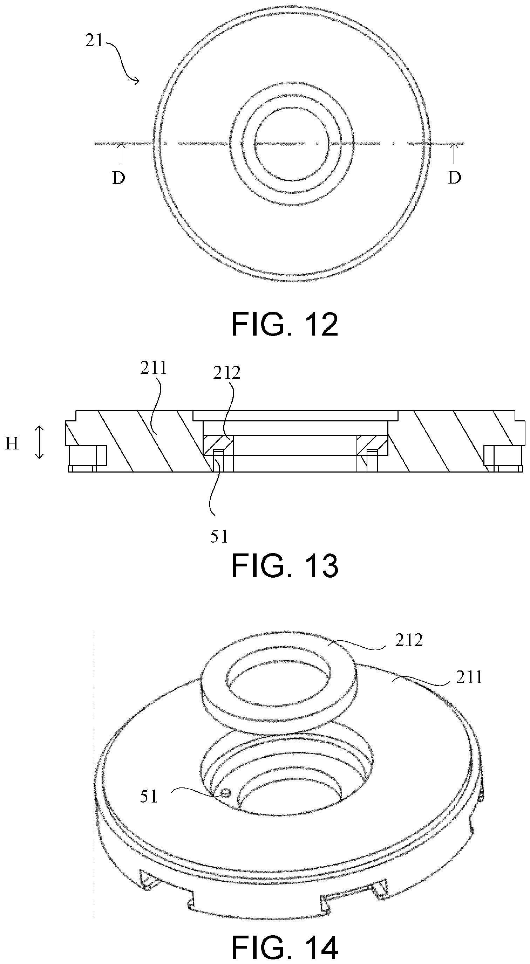

FIG. 12 to FIG. 14 are schematic views of the structure provided by Embodiment 3 of the disclosure. Only the differences from Embodiment 1 are described in detail in this embodiment. For other structures in this embodiment, please refer to Embodiment 1 and other embodiments.

As shown in FIG. 12 to FIG. 14, the first metal layer 211 is provided with a first convex portion 51, and the second metal layer 212 is provided with a first concave portion. The first convex portion 51 is inserted into the first concave portion and is matched with the first concave portion to form a concave-convex structure, so that positioning is achieved, and rotation is prevented. In this way, the reliability of electrical connection between the first metal layer 211 and the second metal layer 212 is improved, so that the overcurrent reliability of the outer conductive member 21 is enhanced. In other embodiments, the first convex portion 51 may be provided on the second metal layer 212, and the first concave portion may be provided on the first metal layer 211. The first convex portion 51 is inserted into the first concave portion and is matched with the first concave portion to form the concave-convex structure.

In this embodiment, a portion of the first metal layer 211 and the second metal layer 212 are sequentially arranged in the axial direction of the outer conductive member 21, and the concave-convex structure formed by the first convex portion 51 and the first concave portion is arranged along the axial direction of the outer conductive member 21, so that the concave-convex structure is simple and easy to be assembled.

To be specific, the first convex portion 51 is cylindrical. A width, that is, a diameter of the first convex portion 51 is 0.5 mm, and a height of a portion of the first convex portion 51 protruding from the surface of the first metal layer 211 is 0.2 mm. A width and a height of the first concave portion are the same as those of the first convex portion 51. The width of the first convex portion 51 refers to the width of the first convex portion 51 in a direction perpendicular to the axial direction. The height of the first convex portion 51 refers to the height protruding from the surface of the first metal layer 211 in the axial direction. In other embodiments, the widths of the first convex portion 51 and the first concave portion may be other values, such as 0.1mm, 0.2mm, 0.5mm, 2mm, 8mm, and 10mm. The heights of the first convex portion 51 and the first concave portion may be other values, such as 0.05mm, 0.1mm, 0.5mm, 1mm, 4mm, or 5mm. When the widths and the heights of the first convex portion 51 and the first concave portion are respectively between 0.2mm and 8mm and between 0.1mm and 4mm, a size of the first concave portion is prevented from being excessively large, so that weakening of the strength of the first metal layer 211 or the second metal layer 212 is prevented from being excessive. Further, sizes of the first concave portion and the first convex portion 51 are prevented from being excessively small, so that the effect on prevention of rotation is prevented from being unfavorable, and problems such as inconvenient processing are prevented from occurring. When the widths and the heights of the first convex portion 51 and the first concave portion are respectively between 0.5mm and 2mm and between 0.5mm and 1mm, the effect is more preferable.

### Embodiment 4

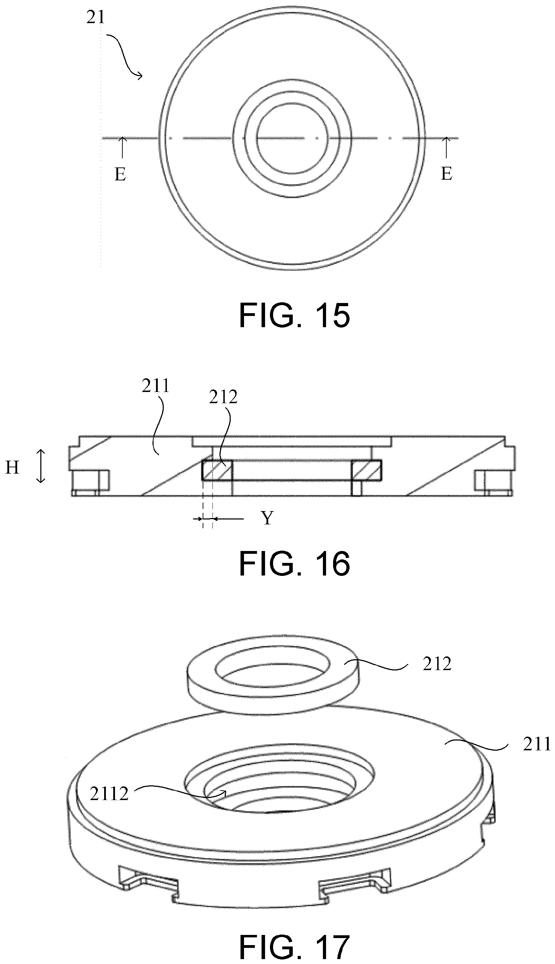

FIG. 15 to FIG. 17 are schematic views of the structure provided by Embodiment 4 of the disclosure. Only the differences from Embodiment 1 are described in detail in this embodiment. For other structures in this embodiment, please refer to Embodiment 1 and other embodiments.

As shown in FIG. 15 to FIG. 17, the first metal layer 211 has a fitting concave portion, and the second metal layer 212 is fitted into the fitting concave portion 2112 of the first metal layer 211. The first metal layer 211 and the second metal layer 212 are fitted to each other, so the reliability of connection between the two is improved, and the overcurrent reliability of the outer conductive member 21 is enhanced. In other embodiments, the fitting concave portion 2112 may be provided on the second metal layer 212. At least a portion of the first metal layer 211 is fitted into the fitting concave portion 2112, and the fitting of the two metal layers is achieved in this way. The operation method for achieving the fitting of the two structures is related art.

As shown in FIG. 16, a fitting width of the first metal layer 211 and the second metal layer 212 is Y, and Y=1 mm. In other embodiments, Y may be other values, such as 0.1mm, 0.2mm, 1mm, 5mm, 15mm, and 20mm. When the value of Y is between 0.2mm and 15mm, the fitting width is prevented from being excessively small, so that unreliable fitting is prevented from occurring. Further, the fitting width is also prevented from being excessively large, so that the sizes of the first metal layer 211 and the second metal layer 212 are prevented from being excessively large. Moreover, weakening of the strength of the metal layer provided with the fitting concave portion 2112 is prevented from being excessive. When Y is between 1mm and 5mm, the effect is more preferable.

### Embodiment 5

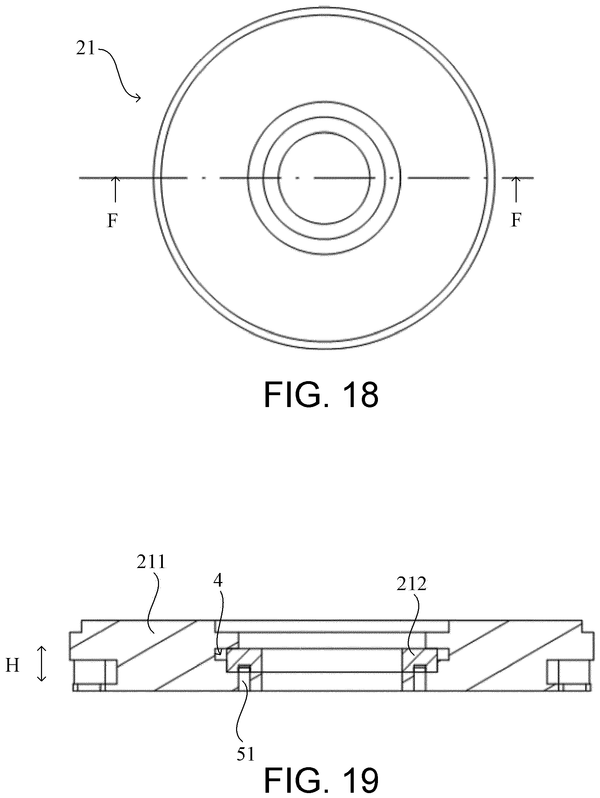

FIG. 18 to FIG. 19 are schematic views of the structure provided by Embodiment 4 of the disclosure. Only the differences from Embodiment 1 are described in detail in this embodiment. For other structures in this embodiment, please refer to Embodiment 1 and other embodiments.

As shown in FIG. 18 to FIG. 19, in this embodiment, the accommodating opening 41 is only provided on a side surface of the first metal layer 211 to form the accommodating groove 4, so that the side surface structure of the metal layer is smooth and easy to be processed. The first metal layer 211 is provided with the first convex portion 51, and the second metal layer 212 is provided with a first groove. The first convex portion 51 is inserted into the first groove to prevent the first metal layer 211 and the second metal layer 212 from rotating. The first metal layer 211 is provided with the fitting concave portion 2112. The first metal layer 211 is fitted into the fitting concave portion 2112, making the connection between the first metal layer 211 and the second metal layer 212 more reliable.

The accommodating opening 41 in this embodiment may be referred to Embodiment 2, the first convex portion 51 and the first concave portion may be referred to Embodiment 3, and the fitting concave portion 2112 may be referred to Embodiment 4. To be specific, in this embodiment, the accommodating opening 41 of the first metal layer 211 is disposed in the fitting concave portion 2112.

Although specific embodiments of the disclosure have been described above, a person having ordinary skill in the art should understand that these are only examples. The protection scope of the disclosure is defined by the appended claims. A person having ordinary skill in the art can make various changes or modifications to these embodiments without departing from the principles and essence of the disclosure, but these changes and modifications all fall within the protection scope of the disclosure.

### List of Reference Numerals

10000: cover assembly,
1: cover body,
2: electrode lead-out member,
21: outer conductive member,
211: first metal layer,
2111: first through hole,
21111: through hole portion,
21112: sink portion,
2112: fitting concave portion,
212: second metal layer,
2121: second through hole,
22: inner conductive member,
3: connection layer,
4: accommodating groove,
41: accommodating opening,
51: first convex portion,
2000: electrode assembly.

## Claims

1. A cover assembly (10000), comprising:
a cover body (1) having a penetrating cover through hole; and
an electrode lead-out member (2) having an outer conductive member (21) and an inner conductive member (22),
wherein the inner conductive member (22) passes through the cover through hole, is configured to be electrically connected to a tab led out from an electrode assembly (2000), and is electrically connected to the outer conductive member (21),
wherein the outer conductive member (21) comprises a first metal layer (211) and a second metal layer (212) of different materials, and a connection layer (3) is provided between the first metal layer (211) and the second metal layer (212).

2. The cover assembly (10000) according to claim 1, wherein a first through hole (2111) is provided on the first metal layer (211), and at least a portion of the second metal layer (212) is located in the first through hole (2111),
a second through hole (2121) is provided in the second metal layer (212), and at least a portion of the inner conductive member (22) is located in the second through hole (2121) and connected to the second metal layer (212) at the second through hole (2121).

3. The cover assembly (10000) according to claim 2, wherein the first through hole (2111) comprises a through hole portion (21111) and a sink portion (21112), the sink portion (21112) is located on a side of the first metal layer (211) away from the electrode assembly (2000), a middle portion of the sink portion (21112) is provided with the through hole portion (21111) and forms a step together with the through hole portion (21111), and at least a portion of the second metal layer (212) is connected to a side of the sink portion (21112) close to the electrode assembly (2000).

4. The cover assembly (10000) according to claim 1, wherein the connection layer (3) is made of solder, and at least a portion of the first metal layer (211) and at least a portion of the second metal layer (212) are connected by soldering,
the second metal layer (212) and the inner conductive member (22) are made of a same metal material, and the second metal layer (212) and the inner conductive member (22) are electrically connected.

5. The cover assembly (10000) according to any one of claims 1 to 4, wherein in an axial direction of the outer conductive member (21), the first metal layer (211) and the second metal layer (212) at least partially overlap, a side of the connection layer (3) close to the electrode assembly (2000) extends to a side of an overlapping portion of the first metal layer (211) and the second metal layer (212) close to the electrode assembly (2000), and a side of the connection layer (3) away from the electrode assembly (2000) extends to a side of the overlapping portion of the first metal layer (211) and the second metal layer (212) away from the electrode assembly (2000).

6. The cover assembly (10000) according to any one of claims 1 to 4, wherein an accommodating groove (4) is formed between opposite side walls of the first metal layer (211) and the second metal layer (212), and the connection layer (3) at least partially extends into the accommodating groove (4).

7. The cover assembly (10000) according to claim 6, wherein in an axial direction of the outer conductive member (21), a side of the accommodating groove (4) away from the electrode assembly (2000) does not exceed a side of the first metal layer (211) away from the electrode assembly (2000), or
in an axial direction of the outer conductive member (21), a side of the connection layer (3) away from the electrode assembly (2000) extends to a side of the accommodating groove (4) close to the electrode assembly (2000).

8. The cover assembly (10000) according to claim 6, wherein accommodating opening (41)s are provided on side walls of the first metal layer (211) and/or the second metal layer (212) to form the accommodating groove (4).

9. The cover assembly (10000) according to claim 1, wherein one of the first metal layer (211) and the second metal layer (212) is provided with a first convex portion (51) and the other one of the first metal layer (211) and the second metal layer (212) is provided with a first concave portion, and the first convex portion (51) and the first concave portion are matched with each other to form a concave-convex structure,
each of the first convex portion (51) and the first concave portion has a width of 0.2mm to 8mm and a height of 0.1mm to 4mm.

10. The cover assembly (10000) according to claim 9, wherein at least a portion of the first metal layer (211) and at least a portion of the second metal layer (212) are sequentially arranged in an axial direction of the outer conductive member (21), and the concave-convex structure is arranged along the axial direction of the outer conductive member (21).

11. The cover assembly (10000) according to any one of claims 1 to 4 and 9, wherein one of the first metal layer (211) and the second metal layer (212) has a fitting concave portion (2112), and at least a portion of the other one of the first metal layer (211) and the second metal layer (212) is fitted into the fitting concave portion (2112).

12. A battery, comprising:
a casing;
the cover assembly (10000) according to any one of claims 1 to 11, wherein the cover assembly (10000) covers the casing and defines a receiving chamber together with the casing; and
the electrode assembly (2000) received in the receiving chamber.

13. An electronic apparatus comprising the battery according to claim 12.

## Amended claims

### Amended claims in accordance with Rule 137(2) EPC.

1. A cover assembly (10000), comprising:
a cover body (1) having a penetrating cover through hole; and
an electrode lead-out member (2) having an outer conductive member (21) and an inner conductive member (22),
wherein the inner conductive member (22) passes through the cover through hole, is configured to be electrically connected to a tab led out from an electrode assembly (2000), and is electrically connected to the outer conductive member (21),
wherein the outer conductive member (21) comprises a first metal layer (211) and a second metal layer (212) of different materials, and the cover assembly is **characterized in that**
a connection layer (3) is provided between the first metal layer (211) and the second metal layer (212).

2. The cover assembly (10000) according to claim 1, wherein a first through hole (2111) is provided on the first metal layer (211), and at least a portion of the second metal layer (212) is located in the first through hole (2111),
a second through hole (2121) is provided in the second metal layer (212), and at least a portion of the inner conductive member (22) is located in the second through hole (2121) and connected to the second metal layer (212) at the second through hole (2121).

3. The cover assembly (10000) according to claim 2, wherein the first through hole (2111) comprises a through hole portion (21111) and a sink portion (21112), the sink portion (21112) is located on a side of the first metal layer (211) away from the electrode assembly (2000), a middle portion of the sink portion (21112) is provided with the through hole portion (21111) and forms a step together with the through hole portion (21111), and at least a portion of the second metal layer (212) is connected to a side of the sink portion (21112) close to the electrode assembly (2000).

4. The cover assembly (10000) according to claim 1, wherein the connection layer (3) is made of solder, and at least a portion of the first metal layer (211) and at least a portion of the second metal layer (212) are connected by soldering,
the second metal layer (212) and the inner conductive member (22) are made of a same metal material, and the second metal layer (212) and the inner conductive member (22) are electrically connected.

5. The cover assembly (10000) according to any one of claims 1 to 4, wherein in an axial direction of the outer conductive member (21), the first metal layer (211) and the second metal layer (212) at least partially overlap, a side of the connection layer (3) close to the electrode assembly (2000) extends to a side of an overlapping portion of the first metal layer (211) and the second metal layer (212) close to the electrode assembly (2000), and a side of the connection layer (3) away from the electrode assembly (2000) extends to a side of the overlapping portion of the first metal layer (211) and the second metal layer (212) away from the electrode assembly (2000).

6. The cover assembly (10000) according to any one of claims 1 to 4, wherein an accommodating groove (4) is formed between opposite side walls of the first metal layer (211) and the second metal layer (212), and the connection layer (3) at least partially extends into the accommodating groove (4).

7. The cover assembly (10000) according to claim 6, wherein in an axial direction of the outer conductive member (21), a side of the accommodating groove (4) away from the electrode assembly (2000) does not exceed a side of the first metal layer (211) away from the electrode assembly (2000), or
in an axial direction of the outer conductive member (21), a side of the connection layer (3) away from the electrode assembly (2000) extends to a side of the accommodating groove (4) close to the electrode assembly (2000).

8. The cover assembly (10000) according to claim 6, wherein accommodating opening (41)s are provided on side walls of the first metal layer (211) and/or the second metal layer (212) to form the accommodating groove (4).

9. The cover assembly (10000) according to claim 1, wherein one of the first metal layer (211) and the second metal layer (212) is provided with a first convex portion (51) and the other one of the first metal layer (211) and the second metal layer (212) is provided with a first concave portion, and the first convex portion (51) and the first concave portion are matched with each other to form a concave-convex structure,
each of the first convex portion (51) and the first concave portion has a width of 0.2mm to 8mm and a height of 0.1mm to 4mm.

10. The cover assembly (10000) according to claim 9, wherein at least a portion of the first metal layer (211) and at least a portion of the second metal layer (212) are sequentially arranged in an axial direction of the outer conductive member (21), and the concave-convex structure is arranged along the axial direction of the outer conductive member (21).

11. The cover assembly (10000) according to any one of claims 1 to 4 and 9, wherein one of the first metal layer (211) and the second metal layer (212) has a fitting concave portion (2112), and at least a portion of the other one of the first metal layer (211) and the second metal layer (212) is fitted into the fitting concave portion (2112).

12. A battery, comprising:
a casing;
the cover assembly (10000) according to any one of claims 1 to 11, wherein the cover assembly (10000) covers the casing and defines a receiving chamber together with the casing; and
the electrode assembly (2000) received in the receiving chamber.

13. An electronic apparatus comprising the battery according to claim 12.
